# EUROPEAN PATENT SPECIFICATION

(11) **EP 3 360 652 B1**
(45) Date of publication and mention of the grant of the patent: **15.07.2020**
(21) Application number: 17156069.1
(22) Date of filing: 14.02.2017
(51) Int. Cl.: B25J 9/16, G05B 19/12, B25J 13/08

(54) **DETECTION OF ENGAGEMENT OF ROBOT WITH OBJECT**
ERKENNUNG DES EINGRIFFS EINES ROBOTERS MIT EINEM OBJEKT
DÉTECTION DE CONTACT D'UN ROBOT AVEC UN OBJET

(43) Date of publication of application: 15.08.2018
(73) Proprietor: Sony Corporation, Tokyo 108-0075 (JP)
(72) Inventor: FALK, Mattias, 226 52 Lund (SE); BERGKVIST, Hannes, 254 38 Helsingborg (SE)
(74) Representative: Neusser, Sebastian

(56) References cited:
- US-A1- 2011 254 663
- US-A1- 2017 015 002
- US-B1- 9 489 655

## Description

### FIELD OF THE INVENTION

The present invention relates to methods for supporting handling of an object by a robot and to corresponding devices and systems.

### BACKGROUND OF THE INVENTION

In various fields, objects are handled by robots. For example, such object may correspond to a product which is being manufactured, and during manufacturing of the product, one or more industrial robots may be used to transport, move, machine, or otherwise process the product.

Force feedback is a feature which may be used by robotic systems to monitor interaction of a robot with an object. Typically, force feedback involves measuring the force which is exerted by the robot, e.g., by using force or torque sensors in the robot or by measuring a motor current of an electric motor used for driving the robot. The force feedback information derived in this way may for example be used to address dead reckoning problems arising from the robot being provided with imprecise information concerning the location of an object to be handled by the robot. For example, the object may be located at a location which is slightly different from a location expected by the robot. When the robot then for example grips the object, the force feedback may be used to detect when the robot actually makes contact with the object, and this information be used to correct the robot's information about the location of the object.

However, usage of force or torque sensors may significantly increase costs of the robotic system. Further, deriving force feedback information from motor currents in many cases fails to provide sufficient accuracy.

Accordingly, there is a need for technologies which overcome the above-mentioned problems and allow for efficiently monitoring of interaction of a robot with an object.

US 9,489,655 B1 describes distinguishing RFID tags using motion data. This may be achieved by directing an RFID tag to only broadcast in response to receiving an energizing electromagnetic transmission if a sensor on the RFID tag detects that the RFID tag is accelerating, e.g., due to an item to which the RFID tag is attached being retrieved by a picker robot.

### SUMMARY OF THE INVENTION

The present invention provides a method according to claim 1, a device according to claim 10, a robot according to claim 12, system according to claim 14, and a system according to claim 15. The other claims define further embodiments.

According to an embodiment, a method of supporting handling of an object by a robot is provided. According to the method, a device is placed on the object. For example, the device may be attached to the object, e.g., by glue, screw fixation, suction effect, magnetic force, or the like. Based on measurements performed by at least one sensor of the device, engagement of the robot with the object is detected. Accordingly, the sensor provided in the device placed on the object, i.e., a sensor which is external to the robot, is used for detection of engagement of the robot with the object. This allows for using cheaper types of sensors than a force sensor or a torque sensor. For example, the at least one sensor of the device could comprise an accelerometer or a gyroscope, which may be implemented in a cost-efficient manner, e.g., using MEMS (Micro Electronic Mechanical Systems) technology.

According to an embodiment, the measurements performed by the sensor of the device comprise acceleration measurements. The acceleration measurements may include measurements of linear acceleration along at least one axis, in particular three-dimensional acceleration measurements of linear acceleration along three different axes. Further, the acceleration measurements may include measurements of angular acceleration about at least one axis, in particular three-dimensional acceleration measurements of angular acceleration about three different axes. These axes may for example be orthogonal axes of a coordinate system. Accordingly, the measurements performed by the sensor may assess an acceleration experienced by the device and, because the device is placed on the object, an acceleration experienced by the object. This acceleration may be indicative of the robot engaging and thus moving the object. Accordingly, the acceleration measurements by the sensor of the device may allow for precisely detecting engagement of the robot with the object.

According to an embodiment, the detecting of engagement of the robot with the object comprises correlating motion of the robot and motion of the object as indicated by the measurements. In this way, the measurements can be used to detect, whether and when a movement of the robot results in a corresponding movement of the object, which indicates that the robot engaged with the object.

According to the invention, a location of the object in a coordinate system of the robot is determined based on the detecting of engagement of the robot with the object. Specifically, the detection of engagement of the robot with the object may be used to derive the location of the object from the position of the robot when it engages with the object. In this way, it is also possible to correct the location of the object as derived by the robot from other information, e.g., from configuration data or other measurements. In a similar manner, an orientation of the object in a coordinate system of the robot may be determined based on the detecting of engagement of the robot with the object. For example, if the robot assumes that the object has a certain orientation and based on this assumption expects engagement of the robot with the object at a certain position of the robot, but the position where the engagement is actually detected deviates from this position, the robot may use this deviation as a basis for correcting its information concerning the assumed orientation of the object.

According to an embodiment, a location of the object is determined based on measurement of signals transmitted between the device and at least one further device. For example, the device may be configured as a tag for position measurements and further comprise the sensor for detecting engagement of the robot with the object. In this way, the device may be used for efficiently supporting different types of measurements, in particular the measurements for detection of engagement and the measurements for signal-based determination of the location of the object. Further, the detection of engagement of the robot with the object may be used to enhance precision of the location of the object as derived from the measurements on the signals. The signals transmitted between the device and the further device may comprise ultrasound signals, radio signals, and/or radar signals. These signals may enable precise measurement of locations, without requiring line-of-sight conditions or favorable light conditions. However, it is to be understood that other electromagnetic or acoustic signals could be used as well. The signals may be transmitted from the further device to the device. Accordingly, the device may act as a receiver of the signals. Alternatively or in addition, the signals may be transmitted from the device to the further device. The device may thus also act as a transmitter of the signals. In some scenarios, signals from the further device to the device and signals from the device to the further device may also be used in combination. The further device may correspond to the robot or may be attached to the robot.

According to an embodiment, the device sends a report of a result of the detecting of engagement of the robot with the object to the robot. Accordingly, the detecting of engagement of the robot with the object may be performed by the device. In this way, the detecting of engagement may be implemented with low complexity on the robot side.

According to an embodiment, the device sends a report of the performed measurements to the robot. The detecting of engagement of the robot with the object may be performed by the robot, based on the reported measurements. In this way, complexity on the device side may be reduced.

According to a further embodiment, a device is provided. The device is to be placed on, e.g., attached to, an object handled by a robot. The device comprises at least one sensor, e.g., an accelerometer and/or a gyroscope. Further, the device comprises an interface with respect to the robot. Further, the device comprises a processor. The processor is configured to, based on measurements performed by the at least one sensor of the device, detect engagement of the robot with the object. Further, the processor is configured to send, via the interface, a report of a result of the detecting of engagement of the robot with the object to the robot. For example, when the processor detects engagement of the robot with the object, the processor may send an indication of the detected engagement via the interface to the robot.

The processor of the device may be configured to control the device to operate according to the above method.

Accordingly, the processor of the device may be configured to control acceleration measurements performed by the sensor of the device, e.g., measurements of linear acceleration along at least one axis, in particular three-dimensional acceleration measurements of linear acceleration along three different axes, and/or measurements of angular acceleration about at least one axis, in particular three-dimensional acceleration measurements of angular acceleration about three different axes. These axes may for example be orthogonal axes of a coordinate system.

Further, the processor of the device may be configured to detect the engagement of the robot with the object by correlating motion of the robot and motion of the object as indicated by the measurements.

According to the invention, the processor of the device is configured to determine, based on the detecting of engagement of the robot with the object, a location of the object in a coordinate system of the robot and/or an orientation of the object in a coordinate system of the robot.

Further, the processor of the device may be configured to determine a location of the object based on measurement of signals transmitted between the device and at least one further device, e.g., as explained in the above method. The signals transmitted between the device and the further device may comprise ultrasound signals, radio signals, and/or radar signals. However, it is to be understood that other electromagnetic or acoustic signals could be used as well. The signals may be transmitted from the further device to the device. Accordingly, the device may act as a receiver of the signals. Alternatively or in addition, the signals may be transmitted from the device to the further device. The device may thus also act as a transmitter of the signals. In some scenarios, signals from the further device to the device and signals from the device to the further device may also be used in combination. The further device may correspond to the robot or may be attached to the robot.

According to a further embodiment, a robot for handling an object is provided. The robot comprises an interface with respect to a device to be placed on the object: Further, the robot comprises a processor configured to receive, via the interface, a report of measurements performed by at least one sensor of the device, e.g., acceleration measurements. The at least one sensor of the device may comprise an accelerometer or a gyroscope. Further, the processor of the device is configured to detect, based on the reported measurements, engagement of the robot with the object.

The processor of the robot may be configured to control the robot to operate according to the above method.

Accordingly, the processor of the robot may be configured to detect the engagement of the robot with the object by correlating motion of the robot and motion of the object as indicated by the measurements.

According to the invention, the processor of the robot is configured to determine, based on the detecting of engagement of the robot with the object, a location of the object in a coordinate system of the robot and/or an orientation of the object in a coordinate system of the robot.

Further, the processor of the robot may be configured to determine a location of the object based on measurement of signals transmitted between the device and at least one further device, e.g., as explained in the above method. The signals transmitted between the device and the further device may comprise ultrasound signals, radio signals, and/or radar signals. However, it is to be understood that other electromagnetic or acoustic signals could be used as well. The signals may be transmitted from the further device to the device. Accordingly, the device may act as a receiver of the signals. Alternatively or in addition, the signals may be transmitted from the device to the further device. The device may thus also act as a transmitter of the signals. In some scenarios, signals from the further device to the device and signals from the device to the further device may also be used in combination. The further device may correspond to the robot or may be attached to the robot.

According to a further embodiment, a system is provided. The system comprises a device according to the above embodiment and a robot. That is to say, the device comprises the at least one sensor and is configured to perform the detecting of engagement and send a report of a result of the detecting of engagement to the robot. The robot is configured to receive the report from the device. The robot may then use the reported results for various purposes, in particular for determining the location of the object or for enhancing precision of information concerning the location of the object. Further, the robot may use the reported results for monitoring or controlling its operation.

According to a further embodiment, a system is provided. The system comprises a robot according to the above embodiment and the device to be placed on the object. That is to say, the device comprises the at least one sensor and is configured to send a report of a result of the measurements performed by the sensor to the robot. The robot is configured to receive the report of the measurements and detect, based on the reported measurements, engagement of the robot with the object. The robot may then use the results of the detecting of engagement for various purposes, in particular for determining the location of the object or for enhancing precision of information concerning the location of the object. Further, the robot may use the results for monitoring or controlling its operation.

The above and further embodiments of the invention will now be described in more detail with reference to the accompanying drawings.

### BRIEF DESCRIPTION OF THE DRAWINGS

Fig. 1 schematically illustrates an exemplary scenario in which engagement of a robot with an object is detected according to an embodiment of the invention.
Fig. 2 schematically illustrates a device according to an embodiment of the invention and positioning measurements which may be performed with the device.
Fig. 3A and 3B schematically illustrate an exemplary scenario in which the robot engages the object.
Fig. 4 shows a flowchart for illustrating a method according to an embodiment of the invention.
Fig. 5 schematically illustrates a processor-based implementation of a tag device according to an embodiment of the invention.
Fig. 6 schematically illustrates a processor-based implementation of a robot or robot module according to an embodiment of the invention.

### DETAILED DESCRIPTION OF EMBODIMENTS

In the following, exemplary embodiments of the invention will be described in more detail. It has to be understood that the following description is given only for the purpose of illustrating the principles of the invention and is not to be taken in a limiting sense. Rather, the scope of the invention is defined only by the appended claims and is not intended to be limited by the exemplary embodiments described hereinafter.

The illustrated embodiments relate to scenarios where a robot handles an object and engagement of the robot with the object is detected. For this purpose, a device is placed on the object. The device is equipped with one or more sensors, e.g., an accelerometer and/or a gyroscope. Based on measurements performed by the sensor(s) of the device, engagement of the robot with the object is detected. The measurements may include measurements of linear and/or angular acceleration in one, two, or three dimensions. The engagement of the robot with the object may for example involve that the robot makes physical contact with the object and/or exerts a force causing movement of the object. The device may be implemented as a tag device or marker in the form of a compact size device which can be removably or permanently attached to the object, e.g., by a glue, screw fixation, suction effect, or by magnetic force.

In the illustrated examples, it is assumed that the tag device is a multipurpose tag device which, in addition to supporting measurements using the sensor(s), supports additional functionalities like measurement of a location of the object based on signals transmitted between the tag device and another device and/or storage of information about the object on which the tag device is placed. The latter information may in particular include information on characteristics of the object, such as weight, dimensions, constituent materials). The information on the characteristics of the object could also include a model description of the object, e.g., in the form of a two- or three-dimensional geometric model description, such as a CAD (computer aided design) model or CAM (computer aided manufacturing) model.

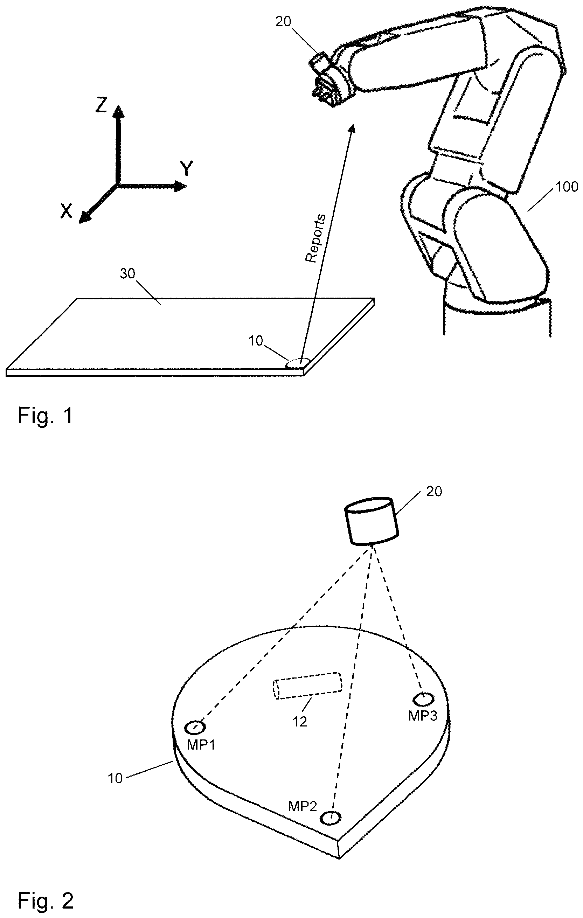

Fig. 1 shows an exemplary scenario involving an industrial serial robot 100 which is used for handling an object 30, e.g., by gripping the object 30 and/or moving the object 30. In the illustrated example, the object 30 is assumed to be a rectangular shaped plate, e.g., to be used as an element in construction of an apparatus. As illustrated a tag device 10 is attached to the object 30. As outlined above, the tag device 10 supports acceleration measurements by one or more sensors of the tag device 10 and signal based location measurements using signals transmitted between the tag device 10 and a further device 20. As further illustrated, the tag device 10 sends reports to the robot 100. These reports include results of the measurements performed by the sensor(s) of the tag device 10. Further, these reports may also include results of signal-based position measurements performed by the tag device 10. The reports may for example be transmitted by a Bluetooth technology. However, it is noted that other wireless communication technologies could be used as well, e.g., a WLAN (Wireless Local Area Network) technology or a proprietary radio technology. The reported results may include measurement data collected from the sensor(s) of the tag device 10, e.g., measured linear and/or angular accelerations. Alternatively or in addition, the reported results may include information evaluated from measurement data collected from the sensor(s) of the tag device 10, in particular an indication of detected engagement of the robot 100 with the object 30.

As illustrated, the tag device 10 is placed in a well-defined position and orientation on the object 30. This is achieved by bringing a reference feature of the tag device 10 into alignment with a reference feature of the object 30. In the illustrated example, the tag device 10 is substantially disc shaped and has with a triangular shaped corner which forms the reference feature of the tag device 10. As illustrated, the triangular shaped corner of the tag device 10 can be brought into alignment with one of the outer corners of the object 30. In this way, the tag device 10 is placed in a well-defined position and orientation on the object 30. This well-defined position helps to deduce the location and orientation of the object 30 from a position and orientation of the tag device 10. However, it is noted that in some usage scenarios a specific way of placing the tag device 10 on the object 30 might not be required. For example, in some cases, the location and optionally also the orientation of the tag device 10 may be directly used as an estimate of the location and optionally also orientation of the object 30, e.g., if the object 30 is relatively small so that impact of different possibilities of placing the positioning tag on the object 30 on accuracy of the determination of the location and orientation is negligible. The location and optionally also orientation of the object 30 may be represented as coordinates in a coordinate system, e.g., an x-y-z-coordinate system of the robot 100 as illustrated in Fig. 1.

As illustrated in Fig. 2, the tag device 10 includes a sensor system 12. In the illustrated example, it is assumed that the sensor system 12 includes an accelerometer configured for measurement of linear acceleration along three orthogonal axes and a gyroscope configured for measurement of angular acceleration about these three orthogonal axis. The accelerometer and/or gyroscope may for example be implemented using MEMS technology. However, it is noted that this implementation of the sensor system 12 is merely exemplary and that in alternative implementations, the sensor system 12 could include only an accelerometer or only a gyroscope, or that the accelerometer and/or the gyroscope could support less measurement axes, e.g., only to orthogonal axis within the disc plane of the of the tag device. Further, it is noted that the axes of the acceleration measurements are not necessarily aligned with the axes of the x-y-z coordinate system of the robot 100. However, signal-based location and orientation measurements as further explained below may be used for conversion of the measured accelerations into the x-y-z-coordinate system of the robot 100.

As indicated above, measurements of signals transmitted to or from the tag device 10 placed on the object 30 may then be used for determining the location, and optionally also orientation, of the object 30.

As further illustrated in Fig. 2, the tag device 10 includes multiple measurement points MP1, MP2, MP3. These measurement points MP1, MP2, MP3 have a well-defined arrangement on the positioning tag 10. For example, the arrangement could be represented by local coordinates of the measurement points MP1, MP2, MP3, and these local coordinates could be defined with respect to the reference feature of the positioning tag 10. At each of these measurement points MP1, MP2, MP3, the tag device 10 receives a signal transmitted from a further device 20. On the basis of the received signals, the tag device 10 measures the position of each measurement point 11 in the given coordinate system, e.g., using run-time based distance measurements, triangulation calculations, and/or trilateration calculations for each of the measurement points MP1, MP2, MP3. Here, it is noted that for each of the measurement points MP1, MP2, MP3, multiple measurements may need to be performed in order to measure the position of the measurement point MP1, MP2, MP3. This may be achieved by configuring the further device 20 to transmit the signals from multiple well defined positions in the coordinate system, e.g., by moving the device 20 to different positions or by providing the device 20 with multiple transmitters for the signals.

Based on the known arrangement of the measurement points MP1, MP2, MP3 on the tag device 10, the location and optionally also orientation of the tag device 10 is determined. Based on the placement of the tag device 10 on the object 30 this is in turn used as a basis for estimating the location and optionally also orientation of the object 30.

It is noted that as an alternative or in addition to using signals transmitted from the device 20 to the tag device 10, also signals transmitted from the tag device 10 to the device 20 could be used. Results of measurements on signals transmitted from the tag device 10 to the device 20 could then be reported back to the tag device 10, so that the tag device 10 can determine its own position in the coordinate system and also the location of the object 30 in the coordinate system based on the measurements. The reported results of the measurements may include rule measurement results, such as distances evaluated from run-time based measurements, or may also include results obtained by further analysis of measurement results. In some cases, the reported results of the measurements could also include the location, and optionally orientation, of the object 30 as determined from the measurements on the signals.

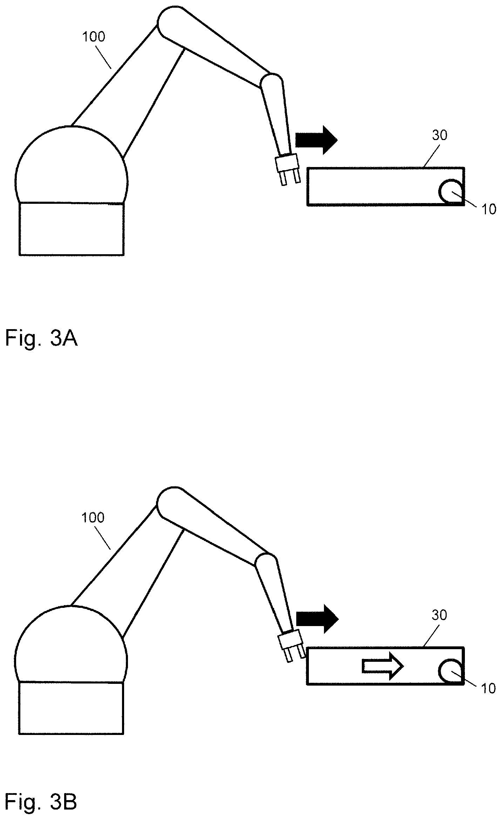

Figs. 3A and 3B schematically illustrate how the measurements performed by the sensor(s) of the tag 10 may be used for detection of engagement of the robot 100 with the object 30. In the scenario of Figs. 3A and 3B it is assumed, that the robot 100 is operated to move the object 30 by pushing it into a desired location. Accordingly, the robot 100 moves its arm towards the object 30, as illustrated by a solid arrow in Fig. 3A. This movement may be controlled based on information on the location, orientation, and geometry of the object 30 as defined in programming of the robot 100. The location and orientation could for example be obtained from signal based measurements as explained above. Information concerning the geometry of the object 30 could for example be obtained from data stored in the tag device 10. An initial location estimate for the object 30 may be used to define a starting position of the movement towards the object 30.

In the situation as illustrated in Fig. 3A, the robot 100 has not yet engaged with the object 30. Accordingly, movement of the robot 100 does not translate into movement of the object 30. However, the robot 100 approaches the object 30, so that it will eventually make physical contact with the object 30 and thus engage with the object 30.

This situation when the robot 100 engages with the object 30 is illustrated in Fig. 3B. As can be seen, the robot 100 makes contact with the object 30 and further movement of the robot 100 thus translates into a corresponding movement of the object 30 and the tag device 10 attached to it, as illustrated by an open arrow in Fig. 3B. Because the object 10 and the tag device 10 start to move when the robot 100 engages the object 30, the sensor(s) of the tag device 10 sense acceleration of the tag device 10 and thus of the object 30. Here, it is noted that the sensed acceleration may be linear acceleration in the direction of the movement of the robot 100. However, in some situations, the movement of the robot 100 may at least in part also translate into rotation of the object 30. Accordingly, the sensor(s) of the tag device 10 could also sense angular acceleration in response to the robot 100 engaging with the object 30.

The measurements performed by the sensor(s) of the tag device 10 can thus be used as a basis for detecting the engagement of the robot 100 with the object 30. For example, if the measured linear or angular acceleration exceeds a threshold, this may be interpreted as an indication of the robot 100 engaging with the object 30. In more sophisticated evaluations, movement of the robot 100 could be correlated with the measurements performed by the sensor(s) of the tag device 10. For example, if an acceleration in a certain direction is sensed while the robot 100 moves into the same direction, this could be interpreted as an indication of the robot 100 engaging with the object 30. Still further, it is noted that the sensed acceleration could also be used for detecting that the robot 100 disengages from the object 30, because this engagement of the robot 100 from the object 30 while the robot 100 moves the object 30 will also result in an acceleration of the object 30 and the tag device 10 attached to it.

In the scenario of Figs. 3A and 3B, the robot may also be controlled to move in a stepwise manner towards the object 30. For each step, the measurements performed by the sensor(s) of the tag device 10 may be used to check whether the robot 100 engaged with the object 30. If this is the case, the stepwise movement may be stopped and the current position of the robot 100 be used for correcting the initial location estimate for the object 30. This stepwise movement may be useful if actual movement of the object 30 is not intended and the detection of engagement is used merely for the purpose of obtaining more precise information about the location and orientation of the object. By way of example, a step size of 0.1 mm may allow for achieving a location accuracy of 0.1 mm. The stepwise movement may also allow for avoiding problems arising from a delay between the actual engagement and the detected engagement being registered by the robot 100, e.g., delays due to transmission of reports from the tag device 10 to the robot 100. The stepwise movement towards the object 30 may be repeated from different directions to thereby assess the location and boundaries of the object in two or three dimensions.

It is noted that the measured accelerations may also be used to evaluate various supplemental information. For example, if information concerning the weight of the object 30 is available, e.g., in programming parameters of the robot 100 in information stored in the tag device 10, the measured linear accelerations could be used to calculate a force applied by the robot 100 to the object 30. The measurements performed by the sensor(s) of the tag device 10 may thus be used for providing force feedback information to the robot 100. In a similar manner, torque applied by the robot 100 to the object 30 could be irradiated from measured angular accelerations and information on a moment of inertia of the object 30, which could also be available from programming parameters of the robot 100 in information stored in the tag device 10 or be calculated from information on the geometry of the object.

Still further, the detection of engagement may also use the measurements of location as performed on the basis of the signals transmitted to or from the tag device 10 as supplemental information. For example, the location as estimated on the basis of the signals may be used to define a starting position for movement of the robot, thereby confining a search range over which the robot needs to move before engaging with the object. Further, the sensed accelerations may be interpreted as being indicated of engagement of the robot 100 with the object 30 under the further condition that the location object 30 as estimated on the basis of the signals is less than a certain minimum distance from the robot 100.

On the other hand, the detection of engagement of the robot 100 with the object 30 may also be used to enhance precision of the location estimate obtained on the basis of the signals transmitted to or from the tag device 10. Specifically, if the engagement of the robot 100 with the object 30 occurs at a position of the robot 100 which deviates from that as expected on the basis of the location estimate obtained on the basis of the signals transmitted to or from the tag device 10, the location estimate may be corrected accordingly, e.g., by applying a shift compensating the deviation to the location estimates obtained on the basis of the signals transmitted to or from the tag device 10. Accordingly, the detection of engagement of the robot 100 with the object 30 may also be used to address dead reckoning problems.

As mentioned above, the evaluation of the measurements performed by the sensor(s) of the tag device 10 so as to detect engagement of the robot 100 with the object 30, and optionally also other evaluations, may be performed by the tag device 10, which would then report the detected engagement to the robot 100. Alternatively or in addition, the tag device 10 could report the accelerations measured by the sensor(s) of the tag device 10 to the robot 100, and the robot 100 could then perform the evaluations.

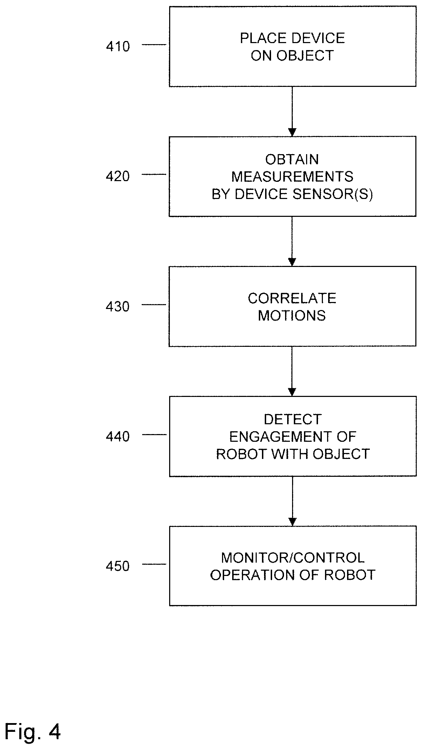

Fig. 4 shows a flowchart illustrating a method which may be used for determining supporting handling of an object by a robot according to the concepts as described above. At least a part of the method may for example be implemented by a device which is placed on the object and includes at least one sensor, such as the above-mentioned receiver tag device 10. If a processor based implementation of the device is utilized, at least a part of the steps of the method may be performed, controlled, and/or guided by one or more processors of the device. Further, at least a part of the method may be implemented by the robot, such as the above-mentioned robot 100. If a processor based implementation of the robot is utilized, at least a part of the steps of the method may be performed, controlled, and/or guided by one or more processors of the robot. Further, the method could also be implemented by a system including the robot and a device placed on the object handled by the robot, e.g., by the system including the above-mentioned robot 100 and the above-mentioned tag device 10.

At step 410, a device is placed on the object, e.g., like the above-mentioned tag device 10 which is placed on the object 30. The device may for example be attached to the object, e.g., by glue, screw fixation, suction effect, or by magnetic force. However, it is noted that other ways of attaching or fixing the device to the object could be used as well, e.g., based on friction, adhesion, form fit, or the like. The device may be removably or permanently attached to the object, e.g., by a glue, screw fixation, suction effect, or by magnetic force. The device includes at least one sensor, e.g., an accelerometer configured to measure linear acceleration(s) and/or a gyroscope configured to measure angular acceleration(s), e.g., as used in the above-mentioned sensor system 12.

At step 420, measurements performed by the at least one sensor of the device are obtained. This may for example involve that the device controls the at least one sensor to perform the measurements. Further, this may involve that the device sends reports of results of the measurements to the robot. Further, this may involve that the robot receives reports of results of the measurements from the device.

The measurements performed by the at least one sensor of the device may include acceleration measurements. The acceleration measurements may include measurements of linear acceleration along at least one axis, in particular three-dimensional acceleration measurements of linear acceleration along three different axes. Further, the acceleration measurements may include measurements of angular acceleration about at least one axis, in particular three-dimensional acceleration measurements of angular acceleration about three different axes. These axes may for example be orthogonal axes of a coordinate system.

At step 430, the measurements obtained at step 430 may be correlated with motion of the robot. For example, this may involve determining whether a measured acceleration coincides with motion of the robot and/or determining whether a measured acceleration matches a direction of motion of the robot. Here, it is noted that if the correlation of step 430 is performed by the device, the correlation process may be supported by providing information concerning the motion of the robot to the device.

At step 440, engagement of the robot with the object is detected based on measurements obtained at step 420. The engagement may be detected on the basis of the measurements by comparison of the measurements to a threshold. For example, measured linear or angular accelerations may be compared to thresholds, and if the measured linear or angular acceleration is above a threshold, this may be interpreted as the robot having engaged with the object. As an additional criterion, correlation with motion of the object as performed in step 430 may be used. For example, the linear or angular acceleration exceeding the threshold may be interpreted as the robot having engaged with the object if the correlation of step 430 additionally indicates that the acceleration coincides with motion of the robot and/or matches a direction of motion of the robot. The detection of engagement may include detection of whether or when the robot engages with the object and/or detection of whether when the robot disengages from the object.

If the detection of step 440 is performed by the device, the device may then send a report of results of the detection to the robot. For example, such report may include an indication that the robot engaged with the object and/or an indication that the robot disengaged from the object.

The detection of engagement as performed in step 440, may then be used for various purposes. For example, the detection of engagement may be used for monitoring or controlling operation of the robot in step 450.

Further, a location of the object in a coordinate system of the robot is determined based on the detection of engagement performed in step 440. In particular, the detection of engagement of the robot with the robot may be used to derive the location of the object from the position of the robot when it engages with the object. This information may be used to determine a location estimate for the object or to correct an existing location estimate for the object. In a similar manner, an orientation of the object in a coordinate system of the robot may be determined based on the detecting of engagement of the robot with the object. For example, if the robot assumes that the object has a certain orientation and based on this assumption expects engagement of the robot with the object at a certain position of the robot, but the position where the engagement is actually detected deviates from this position, the robot may use this deviation as a basis for correcting its information concerning the assumed orientation of the object.

In some scenarios, a location of the object is determined based on measurement of signals transmitted between the device and at least one further device, such as the above-mentioned device 20. In this case, the detection of engagement of the robot with the object may be used to enhance precision of the location of the object as derived from the measurements on the signals. The signals transmitted between the device and the further device may comprise ultrasound signals, radio signals, and/or radar signals. However, it is to be understood that other electromagnetic or acoustic signals could be used as well. The signals may be transmitted from the further device to the device. Accordingly, the device may act as a receiver of the signals. Alternatively or in addition, the signals may be transmitted from the device to the further device. The device may thus also act as a transmitter of the signals. In some scenarios, signals from the further device to the device and signals from the device to the further device may also be used in combination. The further device may correspond to the robot or may be attached to the robot, e.g., as illustrated in Fig. 1 for the robot 100 and the device 20.

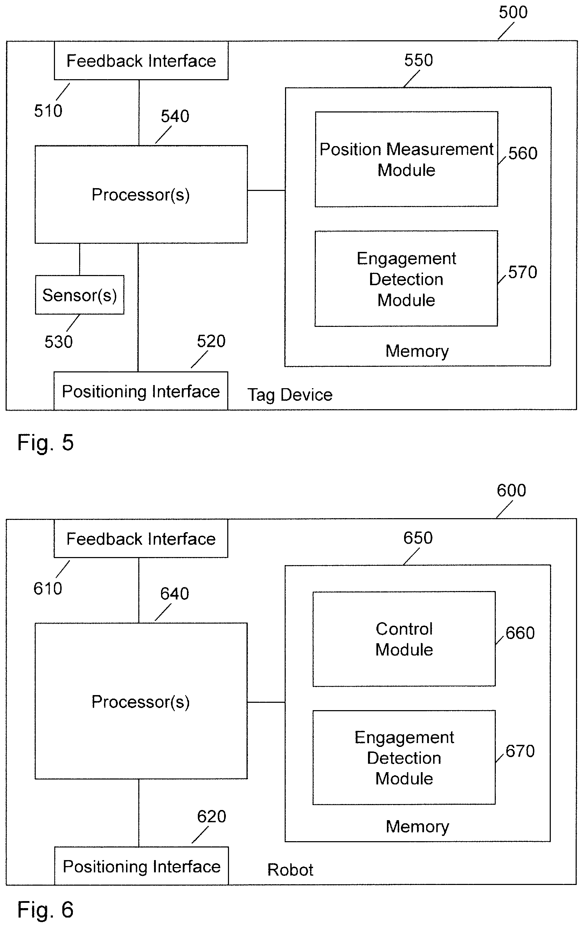

Fig. 5 shows a block diagram for schematically illustrating a processor based implementation of a tag device 500 which may be utilized for implementing the above concepts. The tag device 500 may for example correspond to the above-mentioned tag device 10.

As illustrated, the tag device 500 is provided with a feedback interface 510. The feedback interface 510 may be used for sending reports to a robot, such as the above-mentioned robot 100. In addition, the feedback interface 510 could also be used for receiving data from the robot. The feedback interface 510 can be a wireless interface, e.g., a Bluetooth interface or a WLAN interface.

As further illustrated, the tag device 500 includes a positioning interface 520. The tag device 500 may utilize the positioning interface 520 for receiving or transmitting signals to be used for position measurements. The positioning interface 520 may support reception or transmission of ultrasonic signals, radio signals, and/or of radar signals.

As further illustrated, the tag device 500 includes one or more sensors 530. As indicated above, the one or more sensors 530 may for example include an accelerometer and/or a gyroscope.

Further, the tag device 500 is provided with one or more processors 540 and a memory 550. The interfaces 510, 520, the sensor(s), and the memory 550 are coupled to the processor(s) 540, e.g., using one or more internal bus systems of the tag device 500.

The memory 550 includes program code modules 560, 570 with program code to be executed by the processor(s) 540. In the illustrated example, these program code modules include a position measurement module 560 and an engagement detection module 570.

The position measurement module 560 may implement the above described functionalities of performing position measurements based on signals transmitted or received by the tag device 500. The engagement detection module 570 may implement the above described functionalities of controlling measurements performed by the sensor(s) 530 of the tag device 500 and detecting engagement of a robot with an option based on these measurements. Further, the engagement detection module 570 may also accomplished functionalities for controlling sending reports based on these measurements via the feedback interface 510.

It is to be understood that the structures as illustrated in Fig. 5 are merely exemplary and that the tag device 500 may also include other elements which have not been illustrated, e.g., structures or program code modules for implementing known functionalities of a mobile transmitter/receiver device.

Fig. 6 shows a block diagram for schematically illustrating a processor based implementation of a robot 600, such as the above-mentioned robot 100.

As illustrated, the robot 600 includes a feedback interface 610. The robot 600 may utilize the feedback interface 610 for receiving reports from a device placed on an object handled by the robot 600, such as the above-mentioned tag device 10. In addition, the feedback interface 610 could also be used for sending data to the device placed on the object. The feedback interface 610 can be a wireless interface, e.g., a Bluetooth interface or a WLAN interface.

As further illustrated, the robot 600 may include a positioning interface 620. The robot 600 may utilize the positioning interface 620 for receiving or transmitting signals to be used for position measurements. The positioning interface 620 may support reception or transmission of ultrasonic signals, radio signals, and/or of radar signals.

Further, the robot 600 is provided with one or more processors 640 and a memory 650. The interfaces 610, 620 and the memory 650 are coupled to the processor(s) 640, e.g., using one or more internal bus systems of the robot 600.

The memory 650 includes program code modules 660, 670 with program code to be executed by the processor(s) 640. In the illustrated example, these program code modules include a control module 660 and an engagement detection module 670.

The control module 660 may implement various functionalities for controlling the robot 600. This may for example include controlling the robot to move to a certain position or to move a part of the robot 600, such as a robot arm, to a certain position. In addition, the control module 660 may implement the above described functionalities of performing or supporting position measurements based on signals transmitted or received by a device placed on an object handled by the robot 600, such as the above-mentioned tag device 10. The engagement detection module 670 may implement the above described functionalities of detecting engagement of the robot 600 with an object, based on measurements performed by the sensor(s) of the device placed on the object. For this purpose, the engagement detection module 670 may also implement functionalities for receiving reports which are based on measurements performed by the sensor(s) of the device placed on the object.

It is to be understood that the structures as illustrated in Fig. 6 are merely exemplary and that the robot 600 may also include other elements which have not been illustrated, e.g., structures or program code modules for implementing known functionalities of an industrial robot 600. Further, it is noted that the elements as illustrated in Fig. 6 could also be used for implementing a robot module which can be used for enhancing an existing robot with functionalities as explained above.

As can be seen, the concepts according to embodiments as explained above allow for efficiently supporting handling of an object by a robot. Specifically, the robot can be made aware whether and when it engages with an object. This may be used to enhance operation of the robot in various ways. For example, the detection of engagement can be used to provide the robot with enhanced information on location or orientation of the object handled by the robot. Further, the detection of engagement may also be used for monitoring operation of the robot and to identify faults or problems which may arise during operation of the robot. For example, the detection of engagement as described above could also be used for identifying that the robot disengaged from an object which is currently handled by the robot, e.g., because the robot lost grip of the object. The detection of engagement may thus also be used for replacing all enhancing various force feedback functionalities of a robot.

It is to be understood that the concepts as explained above are susceptible to various modifications. For example, the concepts could be applied in connection with various kinds of robotic systems. Further, the concepts may utilize various types of tag devices, without limitation to the illustrated example of a disk-shaped tag device. Still further, it is noted that in some scenarios also multiple tag devices could be used on the same object.

## Claims

1. A method of supporting handling of an object (30) by a robot (100; 600), the method comprising:
based on measurements performed by at least one sensor (12; 530) of a device (10; 500) placed on the object (30) (10; 500), detecting (440) engagement of the robot (100; 600) with the object (30); and
based on said detecting of engagement of the robot (100; 600) with the object (30), determining a location of the object (30) in a coordinate system of the robot (100; 600).

2. The method according to claim 1,
wherein the measurements comprise acceleration measurements.

3. The method according to claim 1 or 2,
wherein the at least one sensor (12; 530) of the device (10; 500) comprises an accelerometer.

4. The method according to any one of the preceding claims,
wherein the at least one sensor (12; 530) of the device (10; 500) comprises a gyroscope.

5. The method according to any one of the preceding claims,
wherein said detecting of engagement of the robot (100; 600) with the object (30) comprises correlating motion of the robot (100; 600) and motion of the object (30) as indicated by the measurements.

6. The method according to any one of the preceding claims, comprising:
based on said detecting of engagement of the robot (100; 600) with the object (30), determining an orientation of the object (30) in a coordinate system of the robot (100; 600).

7. The method according to any one of the preceding claims, further comprising:
based on measurement of signals transmitted between the device (10; 500) and at least one further device (20), determining a location of the object (30).

8. The method according to any one of the preceding claims, comprising:
the device (10; 500) sending a report of a result of said detecting of engagement of the robot (100; 600) with the object (30) to the robot (100; 600).

9. The method according to any one of the preceding claims, comprising:
the device (10; 500) sending a report of the measurements to the robot (100; 600).

10. A device (10; 500) to be placed on an object (30) handled by a robot (100; 600), the device (10; 500) comprising:
at least one sensor (12; 530);
an interface (510) with respect to the robot (100; 600); and
a processor (550) configured to:
- based on measurements performed by the at least one sensor (12; 530) of the device (10; 500), detect engagement of the robot (100; 600) with the object (30),
- based on the detected engagement of the robot (100; 600) with the object (30), determine a location of the object (30) in a coordinate system of the robot (100; 600); and
- via said interface (510), send a report of a result of said detecting of engagement of the robot (100; 600) with the object (30) to the robot (100; 600), the reported result including the determined location of the object (30).

11. The device (10; 500) according to claim 10,
wherein the processor (550) is configured to control the device (10; 500) to operate according to a method according to any one of claims 1 to 9.

12. A robot (100; 600) for handling an object (30), the robot (100; 600) comprising:
an interface (610) with respect to a device (10; 500) to be placed on the object (30); and
a processor (650) configured to:
- via said interface, receive a report of measurements performed by at least one sensor (12; 530) of the device (10; 500);
- based on the reported measurements, detect engagement of the robot (100; 600) with the object (30); and
- based on detecting engagement of the robot (100; 600) with the object (30), determine a location of the object (30) in a coordinate system of the robot (100; 600).

13. The robot (100; 600) according to claim 12,
wherein the processor (650) is configured to control the robot (100; 600) to operate according to a method according to any one of claims 1 to 7.

14. A system, comprising:
the device (10; 500) according to any one of claims 10 or 11; and
a robot (100; 600) configured to receive the report from the device (10; 500).

15. A system, comprising:
a robot (100; 600) according to any one of claims 12 or 13; and
the device (10; 500) to be placed on the object (30).

## Patentansprüche

1. Verfahren zum Unterstützen der Handhabung eines Objekts (30) durch einen Roboter (100; 600), wobei das Verfahren Folgendes umfasst:
anhand von Messungen, die durch mindestens einen Sensor (12; 530) einer Vorrichtung (10; 500), die auf dem Objekt (30) (10; 500) positioniert ist, ausgeführt werden, Detektieren (440) eines Eingriffs des Roboters (100; 600) mit dem Objekt (30); und
anhand des Detektierens eines Eingriffs des Roboters (100; 600) mit dem Objekt (30) Bestimmen eines Orts des Objekts (30) in einem Koordinatensystem des Roboters (100; 600) .

2. Verfahren nach Anspruch 1,
wobei die Messungen Beschleunigungsmessungen umfassen.

3. Verfahren nach Anspruch 1 oder 2,
wobei der mindestens eine Sensor (12; 530) der Vorrichtung (10; 500) einen Beschleunigungsmesser umfasst.

4. Verfahren nach einem der vorhergehenden Ansprüche,
wobei der mindestens eine Sensor (12; 530) der Vorrichtung (10; 500) ein Gyroskop umfasst.

5. Verfahren nach einem der vorhergehenden Ansprüche,
wobei das Detektieren des Eingriffs des Roboters (100; 600) mit dem Objekt (30) umfasst, die Bewegung des Roboters (100; 600) und die Bewegung des Objekts (30), wie durch die Messungen angegeben, zu korrelieren.

6. Verfahren nach einem der vorhergehenden Ansprüche, das Folgendes umfasst:
anhand des Detektierens eines Eingriffs des Roboters (100; 600) mit dem Objekt (30) Bestimmen einer Ausrichtung des Objekts (30) in einem Koordinatensystem des Roboters (100; 600).

7. Verfahren nach einem der vorhergehenden Ansprüche, das ferner Folgendes umfasst:
anhand einer Messung von Signalen, die zwischen der Vorrichtung (10; 500) und mindestens einer weiteren Vorrichtung (20) gesendet werden, Bestimmen eines Orts (30) des Objekts.

8. Verfahren nach einem der vorhergehenden Ansprüche, das Folgendes umfasst:
Senden durch die Vorrichtung (10; 500) eines Berichts eines Ergebnisses des Detektierens des Eingriffs des Roboters (100; 600) mit dem Objekt (30) an den Roboter (100; 600) .

9. Verfahren nach einem der vorhergehenden Ansprüche, das Folgendes umfasst:
Senden durch die Vorrichtung (10; 500) eines Berichts der Messungen an den Roboter (100; 600).

10. Vorrichtung (10; 500) die auf einem Objekt (30) zu positionieren ist, das durch einen Roboter (100; 600) gehandhabt wird, wobei die Vorrichtung (10; 500) Folgendes umfasst:
mindestens einen Sensor (12; 530);
eine Schnittstelle (510) in Bezug auf den Roboter (100; 600); und
einen Prozessor (550), der konfiguriert ist zum:
- Detektieren eines Eingriffs des Roboters (100; 600) mit dem Objekt (30)anhand von Messungen, die durch den mindestens einen Sensor (12; 530) der Vorrichtung (10; 500) ausgeführt werden,
- Bestimmen eines Orts des Objekts (30) in einem Koordinatensystem des Roboters (100; 600) anhand des detektierten Eingriffs des Roboters (100; 600) mit dem Objekt (30); und
- Senden eines Berichts eines Ergebnisses des Detektierens des Eingriffs des Roboters (100; 600) mit dem Objekt (30) über die Schnittstelle (510) an den Roboter (100; 600), wobei das berichtete Ergebnis den bestimmten Ort des Objekts (30) enthält.

11. Vorrichtung (10; 500) nach Anspruch 10,
wobei der Prozessor (550) konfiguriert ist, die Vorrichtung (10; 500) so zu steuern, dass sie gemäß einem Verfahren nach einem der Ansprüche 1 bis 9 arbeitet.

12. Roboter (100; 600) für die Handhabung eines Objekts (30), wobei der Roboter (100; 600) Folgendes umfasst:
eine Schnittstelle (610) in Bezug auf eine Vorrichtung (10; 500), die auf dem Objekt (30) zu positionieren ist; und
einen Prozessor (650), der konfiguriert ist zum:
- Empfangen über die Schnittstelle eines Berichts von Messungen, die durch mindestens einen Sensor (12; 530) der Vorrichtung (10; 500) ausgeführt werden;
- Detektieren anhand der berichteten Messungen eines Eingriffs des Roboters (100; 600) mit dem Objekt (30); und
- Bestimmen anhand des Detektierens eines Eingriffs des Roboters (100; 600) mit dem Objekt (30) eines Orts des Objekts (30) in einem Koordinatensystem des Roboters (100; 600).

13. Roboter (100; 600) nach Anspruch 12,
wobei der Prozessor (650) konfiguriert ist, den Roboter (100; 600) so zu steuern, dass er gemäß einem Verfahren nach einem der Ansprüche 1 bis 7 arbeitet.

14. System, das Folgendes umfasst:
die Vorrichtung (10; 500) nach einem der Ansprüche 10 oder 11; und
einen Roboter (100; 600), der konfiguriert ist, den Bericht von der Vorrichtung (10; 500) zu empfangen.

15. System, das Folgendes umfasst:
einen Roboter (100; 600) nach einem der Ansprüche 12 oder 13; und
die Vorrichtung (10; 500), die auf dem Objekt (30) zu positionieren ist.

## Revendications

1. Procédé de prise en charge de la manipulation d'un objet (30) par un robot (100 ; 600), le procédé comprenant :
sur la base de mesures réalisées par au moins un capteur (12 ; 530) d'un dispositif (10 ; 500) placé sur l'objet (30) (10 ; 500), la détection (440) d'un contact du robot (100 ; 600) avec l'objet (30) ; et
sur la base de ladite détection de contact du robot (100 ; 600) avec l'objet (30), la détermination d'une position de l'objet (30) dans un système de coordonnées du robot (100 ; 600).

2. Procédé selon la revendication 1, dans lequel les mesures comprennent des mesures d'accélération.

3. Procédé selon la revendication 1 ou 2,
dans lequel l'au moins un capteur (12 ; 530) du dispositif (10 ; 500) comprend un accéléromètre.

4. Procédé selon l'une quelconque des revendications précédentes,
dans lequel l'au moins un capteur (12 ; 530) du dispositif (10 ; 500) comprend un gyroscope.

5. Procédé selon l'une quelconque des revendications précédentes,
dans lequel ladite détection de contact du robot (100 ; 600) avec l'objet (30) comprend la corrélation d'un mouvement du robot (100 ; 600) et d'un mouvement de l'objet (30) tels qu'indiqués par les mesures.

6. Procédé selon l'une quelconque des revendications précédentes, comprenant :
sur la base de ladite détection de contact du robot (100 ; 600) avec l'objet (30), la détermination d'une orientation de l'objet (30) dans un système de coordonnées du robot (100 ; 600).

7. Procédé selon l'une quelconque des revendications précédentes, comprenant en outre :
sur la base d'une mesure de signaux transmis entre le dispositif (10 ; 500) et au moins un autre dispositif (20), la détermination d'une position de l'objet (30).

8. Procédé selon l'une quelconque des revendications précédentes, comprenant :
l'envoi par le dispositif (10 ; 500) au robot (100 ; 600) d'un rapport d'un résultat de ladite détection de contact du robot (100 ; 600) avec l'objet (30).

9. Procédé selon l'une quelconque des revendications précédentes, comprenant :
l'envoi par le dispositif (10 ; 500) au robot (100 ; 600) d'un rapport des mesures.

10. Dispositif (10 ; 500) destiné à être placé sur un objet (30) manipulé par un robot (100 ; 600), le dispositif (10 ; 500) comprenant :
au moins un capteur (12 ; 530) ;
une interface (510) relativement au robot (100 ; 600) ; et
un processeur (550) configuré pour :
- sur la base de mesures réalisées par l'au moins un capteur (12 ; 530) du dispositif (10 ; 500), détecter un contact du robot (100 ; 600) avec l'objet (30),
- sur la base du contact détecté du robot (100 ; 600) avec l'objet (30), déterminer une position de l'objet (30) dans un système de coordonnées du robot (100 ; 600) ; et
- par l'intermédiaire de ladite interface (510), envoyer au robot (100 ; 600) un rapport d'un résultat de ladite détection de contact du robot (100 ; 600) avec l'objet (30), le résultat rapporté comportant la position déterminée de l'objet (30).

11. Dispositif (10 ; 500) selon la revendication 10,
dans lequel le processeur (550) est configuré pour commander au dispositif (10 ; 500) de fonctionner conformément à un procédé selon l'une quelconque des revendications 1 à 9.

12. Robot (100 ; 600) destiné à manipuler un objet (30), le robot (100 ; 600) comprenant :
une interface (610) relativement à un dispositif (10 ; 500) destiné à être placé sur l'objet (30) ; et un processeur (650) configuré pour :
- par l'intermédiaire de ladite interface, recevoir un rapport de mesures réalisées par au moins un capteur (12 ; 530) du dispositif (10 ; 500) ;
- sur la base des mesures rapportées, détecter un contact du robot (100 ; 600) avec l'objet (30) ; et
- sur la base de la détection de contact du robot (100 ; 600) avec l'objet (30), déterminer une position de l'objet (30) dans un système de coordonnées du robot (100 ; 600).

13. Robot (100 ; 600) selon la revendication 12, dans lequel le processeur (650) est configuré pour commander au robot (100 ; 600) de fonctionner conformément à un procédé selon l'une quelconque des revendications 1 à 7.

14. Système, comprenant :
le dispositif (10 ; 500) selon l'une quelconque des revendications 10 ou 11 ; et
un robot (100 ; 600) configuré pour recevoir le rapport depuis le dispositif (10 ; 500).

15. Système, comprenant :
un robot (100 ; 600) selon l'une quelconque des revendications 12 ou 13 ; et
le dispositif (10 ; 500) destiné à être placé sur l'objet (30) .
